(19) Europäisches Patentamt / European Patent Office / Office européen des brevets

(11) **EP 4 597 452 A1**

(12) **EUROPEAN PATENT APPLICATION**
published in accordance with Art. 153(4) EPC

(43) Date of publication:
06.08.2025 Bulletin 2025/32

(21) Application number: 23870627.9

(22) Date of filing: 22.09.2023

(51) International Patent Classification (IPC):
*G06V 20/00* (2022.01)

(52) Cooperative Patent Classification (CPC):
G06V 10/22; G06V 10/26; G06V 10/44;
G06V 10/774; G06V 10/80; G06V 20/00

(86) International application number:
PCT/CN2023/120688

(87) International publication number:
WO 2024/067396 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.09.2022 CN 202211193567

(71) Applicant: Beijing Zitiao Network Technology Co.,
Ltd.
Beijing 100190 (CN)

(72) Inventors:
• ZHAO, Jiacai
  Beijing 100028 (CN)
• GONG, Lixue
  Beijing 100028 (CN)
• WANG, Shuai
  Beijing 100028 (CN)
• XIONG, Yineng
  Beijing 100028 (CN)
• JIAO, Yang
  Beijing 100028 (CN)

(74) Representative: Marks & Clerk LLP
15 Fetter Lane
London EC4A 1BW (GB)

(54) **IMAGE PROCESSING METHOD AND APPARATUS, AND DEVICE AND MEDIUM**

(57) The present disclosure relates to an image processing method and apparatus, and a device and a medium. In the present disclosure, after an image subject object in an image to be processed is recognized, and a target polygonal region where part of the image subject object is located inside same and the other part is located outside same is then generated, the image to be processed and an additional image material can be fused according to the target polygonal region to obtain a fused image, such that the image content of the fused image and the image content of the image to be processed are consistent in a first image region including the target polygonal region and an image region occupied by the image subject object, and the additional image material is presented by means of the image content of the fused image in a second image region outside the first image region, and thus the effect of performing stereoscopic display on the image subject object relative to the target polygonal region is presented, thereby meeting the display requirements of a user for the stereoscopic display of an image and improving the user experience.

Acquire an image to be processed — S110

Perform subject recognition on the image to be processed, so as to obtain an image subject object — S120

Generate a target polygonal region corresponding to the image subject object, wherein part of the image subject object is located in the target polygonal region, and the other part of the image subject object is located outside the target polygonal region — S130

According to the target polygonal region, fuse the image to be processed and an additional image material, so as to obtain a fused image, wherein the content of the fused image and the content of the image to be processed are consistent in a first image region, the additional image material is presented by means of the image content of the fused image in a second image region, the first image region is a combined region of the target polygonal region and an image region occupied by the image subject object, and the second image region is an image region outside the first image region — S140

Fig. 1

## Description

The present application claims the priority of the Chinese Patent Application No. 202211193567.6 filed on September 28, 2022, and the content disclosed in the above Chinese Patent Application is hereby incorporated by reference in its entirety as part of the present application.

TECHNICAL FIELD

The present disclosure relates to an image processing method, an apparatus, a device and a medium.

BACKGROUND

As users have higher and higher requirements for the display of pictures or videos, many users hope that part or all of the content of images displayed in the pictures or videos can be displayed stereoscopically. However, when the existing image editing software or video editing software is used to edit the content of the images or videos, the resulting pictures or videos are all plane pictures or videos, which cannot meet the users' requirements for stereoscopic display of the pictures or videos, resulting in poor user experience.

SUMMARY

In order to solve the above technical problem, the present disclosure provides an image processing method, an apparatus, a device and a medium.
In first aspect, the present disclosure provides an image processing method, comprising:

acquiring an image to be processed;
recognizing a subject of the image to be processed to obtain an image subject object;
generating a target polygon region corresponding to the image subject object, wherein a part of the image subject object is located within the target polygon region, and the other part of the image subject object is located outside the target polygon region; and
fusing the image to be processed and an additional image material to obtain a fused image according to the target polygon region, wherein the fused image and the image to be processed have the same image content in a first image region, the image content of the fused image in a second image region presents the additional image material, the first image region is a combined region of the target polygon region and an image region occupied by the image subject object, and the second image region is an image region outside the first image region.

In second aspect, the present disclosure provides an image processing apparatus, comprising:

an image acquisition module, configured to acquire an image to be processed;
a subject recognition module, configured to recognize a subject of the image to be processed to obtain an image subject object;
a region generation module, configured to generate a target polygon region corresponding to the image subject object, wherein a part of the image subject object is located within the target polygon region, and the other part of the image subject object is located outside the target polygon region; and
an image fusing module, configured to fuse the image to be processed and an additional image material to obtain a fused image according to the target polygon region, wherein the fused image and the image to be processed have the same image content in a first image region, the image content of the fused image in a second image region presents the additional image material, the first image region is a combined region of the target polygon region and an image region occupied by the image subject object, and the second image region is an image region outside the first image region.

In third aspect, the present disclosure provides an image processing device, comprising:

a processor; and
a memory, having executable instructions stored therein;
wherein the processor is configured to read the executable instructions from the memory and execute the executable instructions to implement the image processing method in the first aspect.

In fourth aspect, a computer-readable medium having computer programs stored therein, wherein when the computer programs are executed by a processor, the processor implements the image processing method in the first aspect.

BRIEF DESCRIPTION OF DRAWINGS

The above and other features, advantages and aspects of the embodiments of the present disclosure will become more apparent with reference to the following detailed description in conjunction with the accompanying drawings. Throughout the drawings, the same or similar reference numerals indicate the same or similar elements. It should be understood that the drawings are schematic, and the original and elements are not necessarily drawn to scale.

Fig. 1 is a schematic flow chart of an image processing method provided by an embodiment of the present disclosure;
Fig. 2 is a schematic diagram of an image to be processed provided by an embodiment of the present disclosure;

Fig. 3 is a schematic diagram of a target polygon region provided by an embodiment of the present disclosure;

Fig. 4 is a schematic diagram of a fused image provided by an embodiment of the present disclosure;

Fig. 5 is a schematic diagram of a masked image of an image subject object provided by an embodiment of the present disclosure;

Fig. 6 is a schematic diagram of a minimum bounding rectangle region provided by an embodiment of the present disclosure;

Fig. 7 is a schematic flow chart of a processing process of obtaining a target polygon region provided by an embodiment of the present disclosure;

Fig. 8 is a schematic flow chart of another processing process of obtaining a target polygon region provided by an embodiment of the present disclosure;

Fig. 9 is a schematic flow chart of yet another processing process of obtaining a target polygon region provided by an embodiment of the present disclosure;

Fig. 10 is a schematic diagram of a masked image of a target polygon region provided by an embodiment of the present disclosure;

Fig. 11 is a schematic diagram of a masked image of a first background image provided by an embodiment of the present disclosure;

Fig. 12 is a schematic diagram of a second background image provided by an embodiment of the present disclosure;

Fig. 13 is a structure diagram of an image processing apparatus provided by an embodiment of the present disclosure; and

Fig. 14 is a structure diagram of an image processing device provided by an embodiment of the present disclosure.

DETAILED DESCRIPTION

Embodiments of the present disclosure will be described in more detail below with reference to the attached drawings. While some embodiments of the present disclosure are shown in the attached drawings, it should be understood that the present disclosure can be implemented in various forms and should not be interpreted as being limited to the embodiments set forth herein, and instead, these embodiments are provided for a more thorough and complete understanding of the present disclosure. It should be understood that the attached drawings and embodiments of the present disclosure are only for illustrative purposes and are not intended to limit the scope of protection of the present disclosure.

It should be understood that steps described in the method implementations of the present disclosure may be executed in a different sequence and/or in parallel. Furthermore, the method implementations may include additional steps and/or have the executed and shown steps omitted. The scope of the present disclosure is not limited in this respect.

The term "including" as used herein and its variations are open-ended including, i.e., "including but not limited to". The term "based" means "based at least in part". The term "one embodiment" means "at least one embodiment"; the term "another embodiment" means "at least one another embodiment"; and the term "some embodiments" means "at least some embodiments". Definitions of other terms will be given in the following description.

It should be noted that concepts such as "first" and "second" mentioned in the present disclosure are only used to distinguish between different apparatuses, modules or units and are not used to define the sequence or interdependence of functions executed by these apparatuses, modules or units.

It should be noted that modifiers such as "one" and "multiple" mentioned in the present disclosure are illustrative rather than restrictive, and should be understood by those skilled in the art as "one or more" unless expressly stated otherwise in the context.

The names of messages or information communicated between multiple apparatuses in the implementations of the present disclosure are used for illustrative purposes only and are not intended to limit the scope of these messages or information.

Most users edit pictures or videos by means of image editing software or video editing software, but the images or the videos obtained after editing by means of the image editing software or the video editing software are plane images or videos, which cannot meet the users' requirements for displaying the images or the videos in stereoscopic form.

Taking adding a photo frame to a picture as an example, when a user adds the photo frame to the picture by using the image editing software, the added photo frame is a plane photo frame and the picture with the photo frame added lacks a stereoscopic sense, thereby resulting in poor user experience.

There are some methods for generating a stereoscopic picture in which a stereoscopic frame can be added to a picture. However, the existing methods for generating a stereoscopic image need to use the depth estimation algorithm and the three-dimensional (3D) image affine transformation algorithm, which often have high calculation complexity. Moreover, the effect depends on the accuracy of the depth estimation algorithm, and picture distortion may be caused if the depth estimation algorithm is inaccurate.

Further, in some film and television creation, a stereoscopic photo frame can be added to a video through editing, but the added photo frame only makes use of the occlusion relationship between the video image and the photo frame to create a pseudo-3D effect.

In view of the above problems, embodiments of the present disclosure provide an image processing method, an apparatus, a device and a medium. The image processing method will be firstly introduced in combination with a specific embodiment below.

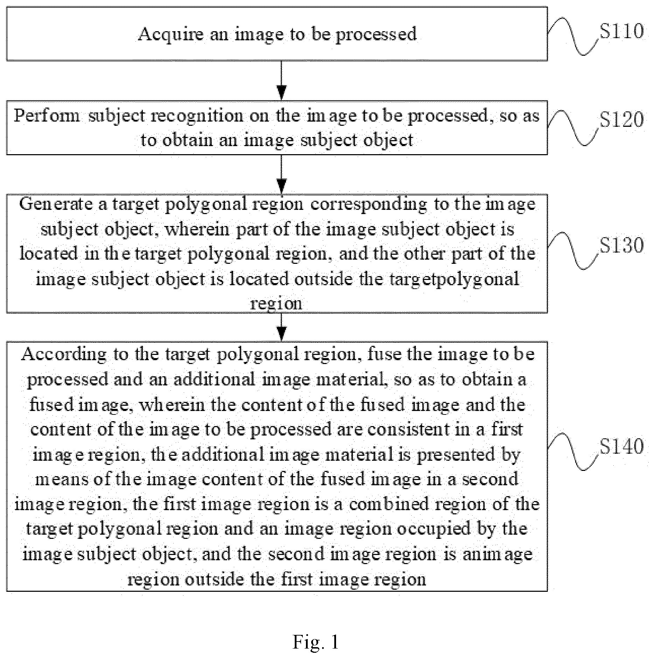

Fig. 1 is a schematic flow chart of an image processing method provided by an embodiment of the present disclosure.

In the embodiment of the present disclosure, the image processing method can be executed by an image processing device. The image processing device may be an electronic device or a server. The electronic device may include but is not limited to a mobile terminal such as a mobile phone, a notebook computer, a digital broadcast receiver, a PDA (personal digital assistant), a PAD (portable Android device), a PMP (portable multimedia player), an in-vehicle terminal (e.g., an in-vehicle navigation terminal) or a wearable device, and a fixed terminal such as a digital TV, a desktop computer or a smart home device. The server may be an independent server or a cluster of multiple servers, and may include a local server and a server built in the cloud.

As shown in Fig. 1, the image processing method mainly comprises the following steps:

S110: acquiring an image to be processed.

In the embodiment of the present disclosure, the image processing device can acquire an image to be processed so as to process the image to be processed in stereoscopic form.

The image to be processed may be an image that needs to be processed in stereoscopic form. The image to be processed may be a picture or an image frame in a video.

When the image processing device is an electronic device, the image to be processed may be a picture or an image frame in a video uploaded or captured by the user, a picture or an image frame in a video downloaded from the server, or a picture or an image frame in a video which is sent to the image processing device from another device.

When the image processing device is a server, the image to be processed may be a picture or an image frame in a video carried in an image processing request which is sent to the server from another device.

S120: recognizing a subject of the image to be processed to obtain an image subject object.

Generally, when a picture or a video is being captured, the photographer usually has designed elements in the picture, such as an image subject object, an image companion object, an image foreground, an image background and an image blank. Moreover, when editing the image, the user wants to edit the image subject object in the image in most cases.

Taking adding a photo frame to the image to be processed as an example, generally the user wants to add a photo frame to the image subject object. Therefore, in the embodiment of the present disclosure, the image processing device needs to firstly recognize the image subject object in the image to be processed after acquiring the image to be processed.

The image subject object may be an object in the image to be processed which is mainly expressed. The image subject object may be a person or a thing, for example, a single person or thing, or multiple persons or things.

In some embodiments, a subject of the image to be processed can be recognized through the image segmentation algorithm to obtain the image subject object.

For example, the image segmentation algorithm is to divide the image to be processed into several specific regions having unique character and find in the above several regions the region where the image subject object is located.

Generally, the region where the image subject object is located is the foreground element, and the other regions are the background elements. Therefore, all the contents included in the foreground element are taken as the image subject object. The image segmentation algorithm for example includes the threshold-based segmentation algorithm, the region-based segmentation method, etc. The specific image segmentation algorithm is not limited in the embodiment of the present disclosure.

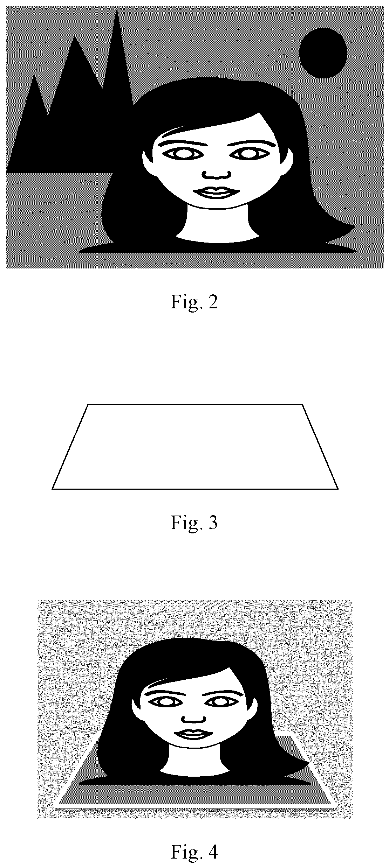

For example, as shown in Fig. 2, the picture shown in Fig. 2 is the image to be processed. The region where the image elements such as a person, a mountain and the sun are located can be recognized by means of the image segmentation algorithm, and the region where the person is located is the foreground element. Therefore, the person in the image to be processed is the image subject object.

In some other embodiments, the image to be processed can be input into a pre-trained subject recognition model used to recognize the subject of the image, the image subject object of the image to be processed is recognized directly through the subject recognition model, and the image subject object output by the subject recognition model is obtained.

S130: generating a target polygon region corresponding to the image subject object, wherein a part of the image subject object is located within the target polygon region, and the other part of the image subject object is located outside the target polygon region.

In the embodiment of the present disclosure, after obtaining the image subject object, the image processing device can generate the target polygon region corresponding to the image subject object.

The target polygon region can be fused with the image to be processed to achieve the effect of a photo frame. Moreover, the position and size of the target polygon region can be determined according to the image subject object so that a part of the image subject object is located within the target polygon region and the other part of the image subject object is located outside the target polygon region. In this way, the effect of stereoscopically displaying the image subject object on the photo frame can be achieved.

Further, the target polygon region may be a polygon region of any shape such as a quadrilateral region or a circular region.

For example, the image processing device generates a material image of the same size as the image to be processed, and generates the target polygon region in the material image according to the relative position and the relative size of the image subject object in the image to be processed. The relative position of the target polygon region in the material image is compatible with the relative position of the image subject object in the image to be processed and the relative size of the target polygon region in the material image is compatible with the relative size of the image subject object in the image to be processed, so that a part of the image subject object is located within the target polygon region and the other part of the image subject object is located outside the target polygon region.

For example, if the target polygon region is a quadrilateral region, the target polygon region generated according to the image subject object is shown in Fig. 3.

S140: according to the target polygon region, fusing the image to be processed and an additional image material to obtain a fused image, wherein the fused image and the image to be processed have the same image content in a first image region, the image content of the fused image in a second image region presents the additional image material, the first image region is a combined region of the target polygon region and an image region occupied by the image subject object, and the second image region is an image region outside the first image region.

In the embodiment of the present disclosure, after generating the target polygon region, the image processing device can fuse the image to be processed with the additional image material to obtain the fused image according to the target polygon region, as shown in Fig. 4.

The fused image and the image to be processed have the same image content in the first image region, and the first image region is the combined region of the target polygon region and the image region occupied by the image subject object. Thus, the target polygon region which is used to achieve the photo frame effect as well as the background image content and the image subject object in the image to be processed which are located within the target polygon region can be displayed in the fused image. Moreover, a part of the image subject object is located within the target polygon region together with the background image content, and the other part of the image subject object is located outside the target polygon region, thereby achieving the stereoscopic photo frame effect.

Further, the additional image material may be a preset background material or a background material selected by the user. The image content of the fused image in the second image region presents the additional image material and the second image region is the image region outside the first image region, so that the image content of the background material outside the first image region can be used as a photo frame background of a stereoscopic photo frame, which further improves the aesthetics of the stereoscopic photo frame effect.

When the image processing device is an electronic device, the resulting fused image can be displayed directly on the electronic device.

When the image processing device is a server, the server can send the resulting fused image to other devices, which receive and display the image sent by the server.

In the embodiment of the present disclosure, after the image subject object in the image to be processed is recognized and the target polygon region which has a part of the image subject object located therein and the other part of the image subject object located outside is further generated, the image to be processed and the additional image material are fused to obtain the fused image according to the target polygon region. Thus, the fused image and the image to be processed have the same image content in the first image region occupied by the target polygon region and the image subject object, and the image content of the fused image in the second image region outside the first image region presents the additional image material, thereby presenting the effect of stereoscopically displaying the image subject object relative to the target polygon region and meeting the user's requirements for stereoscopic display of the image so as to improve the user experience.

In another implementation of the present disclosure, S130 may for example comprise:

> determining a minimum bounding rectangle region corresponding to the image subject object; and adjusting a preset polygon region based on the minimum bounding rectangle region to obtain the target polygon region, wherein the adjusting comprises size adjusting and position adjusting.

In some embodiments of the present disclosure, the image processing device can firstly perform mask processing on the image subject object to obtain a mask image of the image subject object, and then calculate a minimum bounding rectangle frame to obtain the minimum bounding rectangle region according to the mask image of the image subject object.

For example, the image processing device sets each pixel value in the image subject object in the image to be processed to 255, and sets a mask value corresponding to each pixel value to 1, so the image subject object in the image to be processed is shown as white in the image to be processed. Each pixel value in the non-image subject object (for example, the object which is not the image subject object) in the image to be processed is set to 255, and a mask value corresponding to each pixel value is set to 0, so the non-image subject object in the image to be processed is shown as black in the image to be processed. After this step, the mask image of the image subject object can be obtained.

Optionally, mask processing is performed on the image subject object, or the mask value may be set to other values, which is not limited in the embodiments of the present disclosure.

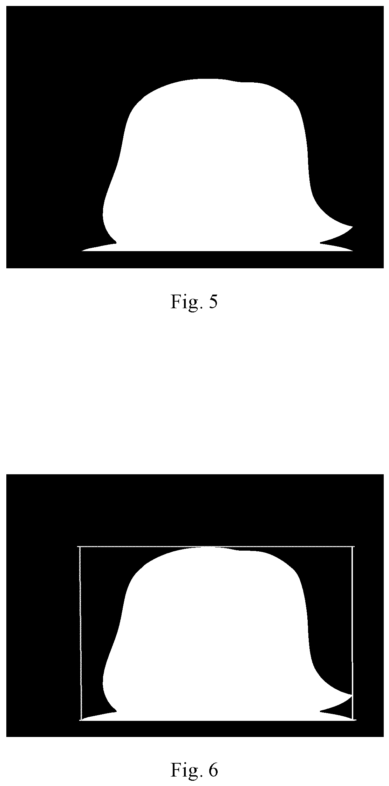

For example, the mask image obtained by processing the image subject object shown in Fig. 2 is shown in Fig. 5.

Then, calculating the minimum bounding rectangle frame according to the mask value of the image subject object may for example comprise: calculating by the image processing device the sum of pixel values of each column and the sum of pixel values of each row in the mask image to obtain an array A composed of the sum of the pixel values of each column and an array B composed of the sum of the pixel values of each row respectively.

After obtaining the array A and the array B, the image processing device traverses backward from the first element of the array A to find the position of the first non-zero element, and then obtains the horizontal coordinate $P_l$ of the left boundary point of the image subject object. The image processing device traverses forward from the last element of the array A to find the position of the first non-zero element, and then obtains the horizontal coordinate $P_r$ of the right boundary point of the image subject object. The image processing device traverses backward from the first element of the array B to find the position of the first non-zero element, and then obtains the vertical coordinate Pt of the top boundary point of the image subject object. The image processing device traverses forward from the last element of the array B to find the position of the first non-zero element, and then obtains the vertical coordinate $P_b$ of the bottom boundary point of the image subject object. The upper left corner of the image to be processed is taken as the origin of coordinates, and lines parallel to the Y-axis are made according to the horizontal coordinate $P_l$ of the left boundary point and the horizontal coordinate $P_r$ of the right boundary point respectively to obtain the left boundary line and the right boundary line. Lines parallel to the X-axis are made according to the vertical coordinate Pt of the top boundary point and the vertical coordinate $P_b$ of the bottom boundary point respectively to obtain the top boundary line and the bottom boundary line. The rectangular frame consisting of the left boundary line, the right boundary line, the top boundary line and the bottom boundary line is used as the minimum bounding rectangle frame, and the region formed by the minimum bounding rectangle frame is the minimum bounding rectangle region.

For example, the minimum bounding rectangle region obtained through calculation according to the mask image of the image subject object shown in Fig. 5 is shown in Fig. 6.

In some other embodiments of the present disclosure, after obtaining the minimum bounding rectangle region, the image processing device can further adjust the preset polygon region based on the minimum bounding rectangle region to obtain the target polygon region.

The preset polygon region may be a polygon region with the 3D effect. For example, the preset polygon region is a quadrilateral region with the 3D effect or a circular region with the 3D effect.

The image processing device can adjust the preset polygon region in the preset material image according to the obtained minimum bounding rectangle region, so as to obtain a polygon region matching the minimum bounding rectangle region, and take the polygon region matching the minimum bounding rectangle region as the target polygon region, in order to obtain the material image with the target polygon region.

For example, after acquiring the preset material image, the image processing device firstly trims the preset material image according to the size of the image to be processed so that the preset material image has the same size as the image to be processed.

Then, the image processing device adjusts the preset polygon region in the preset material image according to the minimum bounding rectangle region so that the adjusted target polygon region matches the minimum bounding rectangle region.

The adjusting comprises size adjusting and position adjusting, i.e., material adjustment of the preset polygon region includes adjusting the size and position of the preset polygon region.

For example, the preset polygon region may be located in the center of the preset material image by default, and the image processing device adjusts the size and position of the preset polygon region in the preset material image according to the size and position of the minimum bounding rectangle region in the image to be processed.

For example, the preset polygon region is a quadrilateral region (e.g., an isosceles trapezoid), and after the size and position of the preset polygon region are adjusted, a quadrilateral region with the 3D effect matching the minimum bounding rectangle region (i.e., the image subject object) is obtained. As another example, the preset polygon region is a circular region (e.g., an ellipsoid), and after the size and position of the preset polygon region are adjusted, a circular region with the 3D effect matching the minimum bounding rectangle region (i.e., the image subject object) is obtained.

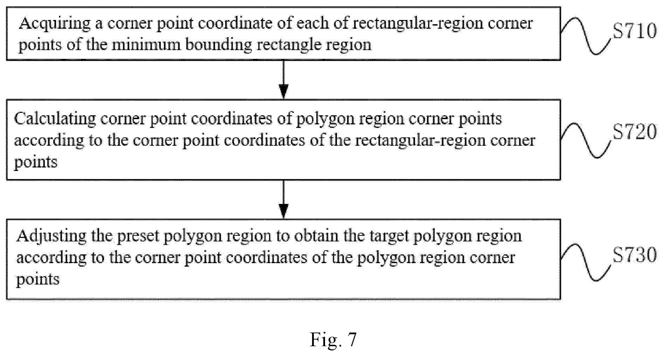

In some other embodiments of the present disclosure, when the preset polygon region is a quadrilateral region, Fig. 7 shows a schematic flow chart of a processing process of obtaining the target polygon region by adjusting the preset polygon region according to the minimum bounding rectangle region provided by an embodiment of the present disclosure.

As shown in Fig. 7, the processing process may include the following steps:

S710: acquiring a corner point coordinate of each of rectangular-region corner points of the minimum bounding rectangle region.

The rectangular-region corner points are region vertexes of the minimum bounding rectangle region.

In the embodiment of the present disclosure, the upper left corner of the image to be processed is taken as the origin of coordinates. After obtaining the minimum bounding rectangle region, the image processing device can determine the coordinates of each rectangular-region corner point of the minimum bounding rectangle region according to boundary points of the minimum bounding rectangle region.

Taking Fig. 6 as an example, according to the horizontal coordinate $P_l$ of the left boundary point, the horizontal coordinate $P_r$ of the right boundary point, the vertical coordinate Pt of the top boundary point and the vertical coordinate $P_b$ of the bottom boundary point in Fig. 6, the corner point coordinates of the four rectangular-region corner points of the minimum bounding rectangle region in Fig. 6 can be obtained as follows: the coordinates of the upper left vertex are $(P_l, P_t)$, the coordinates of the upper right vertex are $(P_r, Pt)$, the coordinates of the lower left vertex are $(P_l, P_b)$, and the coordinates of the lower right vertex are $(P_r, P_b)$.

S720: calculating corner point coordinates of polygon region corner points according to the corner point coordinates of the rectangular-region corner points.

In the embodiment of the present disclosure, after obtaining the corner point coordinates of the rectangular-region corner points of the minimum bounding rectangle region, the image processing device calculates the corner point coordinates of the polygon region corner points according to the corner point coordinates of the rectangular-region corner points.

For example, the function relationship between the corner point coordinates of the rectangular-region corner points of the minimum bounding rectangle region and the corner point coordinates of the polygon region corner points of the polygon region is preset in the image processing device. After bringing the corner point coordinates of the rectangular-region corner points of the minimum bounding rectangle region into the above function relationship, the image processing device obtains the corner point coordinates of the polygon region corner points of the polygon region.

S730: adjusting the preset polygon region to obtain the target polygon region according to the corner point coordinates of the polygon region corner points.

In the embodiment of the present disclosure, according to the corner point coordinates of the polygon region corner points and the corner point coordinates of preset corner points of the preset polygon region, the image processing device calculates a vector (including a moving direction and a moving distance) by which the preset corner points of the preset polygon region need to be moved, and then moves the preset corner points of the preset polygon region according to the vector so as to implement size adjustment and position adjustment of the preset polygon region and thus obtain the target polygon region.

As can be seen, in the embodiment of the present disclosure, the image processing device obtains the corner point coordinates of the polygon region corner points of the polygon region according to the function relationship between the corner point coordinates of the rectangular-region corner points of the minimum bounding rectangle region and the corner point coordinates of the polygon region corner points of the polygon region, and calculates the vector by which the preset corner points of the preset polygon region need to be moved, thereby adjusting the preset polygon region based on the vector to obtain the target polygon region. Therefore, the target polygon region can be obtained only by simple calculation, which improves the calculation efficiency.

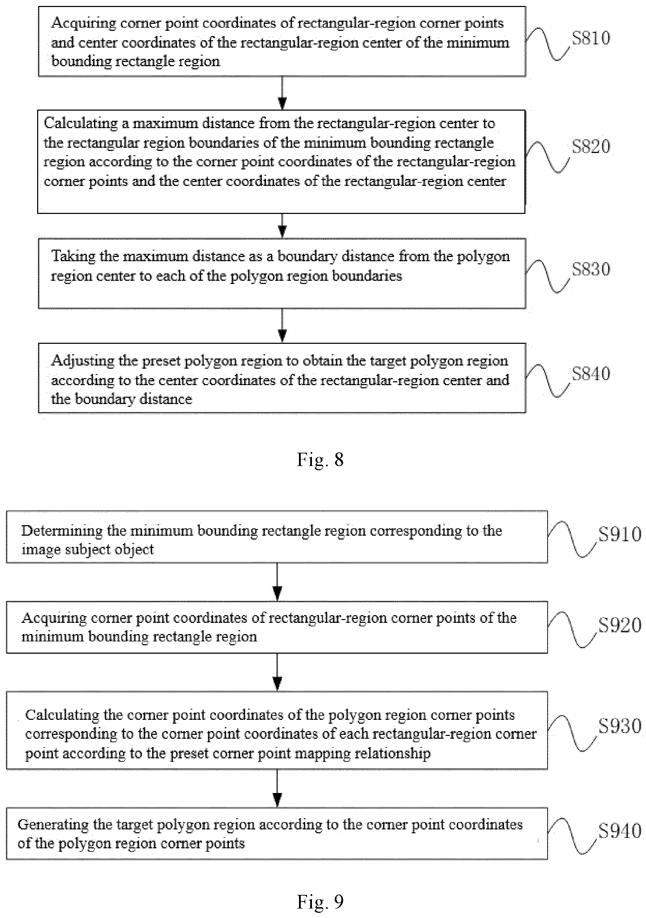

In some further embodiments of the present disclosure, when the preset polygon region is a circular region, Fig. 8 shows a schematic flow chart of another processing process of obtaining the target polygon region by adjusting the preset polygon region according to the minimum bounding rectangle region provided by an embodiment of the present disclosure.

As shown in Fig. 8, the processing process may include the following steps:

S810: acquiring corner point coordinates of rectangular-region corner points and center coordinates of the rectangular-region center of the minimum bounding rectangle region.

The rectangular-region corner points are region vertexes of the minimum bounding rectangle region, and the rectangular-region center is a region center point of the minimum bounding rectangle region.

In the embodiment of the present disclosure, the upper left corner of the image to be processed is taken as the origin of coordinates. After obtaining the minimum bounding rectangle region, the image processing device can determine the coordinates of each rectangular-region corner point and the center coordinates of the rectangular-region center of the minimum bounding rectangle region according to boundary points of the minimum bounding rectangle region.

Continuing to take Fig. 6 as an example, according to the horizontal coordinate $P_l$ of the left boundary point, the horizontal coordinate $P_r$ of the right boundary point, the vertical coordinate Pt of the top boundary point and the vertical coordinate $P_b$ of the bottom boundary point in Fig. 6, the corner point coordinates of the four rectangular-region corner points and the center coordinates of the rectangular-region center of the minimum bounding rectangle region in Fig. 6 can be obtained as follows: the coordinates of the upper left vertex are $(P_l, P_t)$, the coordinates of the upper right vertex are $(P_r, Pt)$, the coordinates of the lower left vertex are $(P_l, P_b)$, the coordinates of the lower right vertex are $(P_r, P_b)$, and the center coordinates are

$$\left( \frac{1}{2}\left( P_r - P_l \right), \frac{1}{2}\left( P_t - P_b \right) \right).$$

S820: calculating a maximum distance from the rectangular-region center to the rectangular region boundaries of the minimum bounding rectangle region according to the corner point coordinates of the rectangular-region corner points and the center coordinates of the rectangular-region center.

In the embodiment of the present disclosure, the image processing device connects the adjacent rectangular-region corner points of the minimum bounding rectangle region to obtain the region boundaries of the minimum bounding rectangle region.

Further, the image processing device calculates the distances from the rectangular-region center to the region boundaries of the minimum bounding rectangle region according to the center coordinates of the rectangular-region center and the region boundaries of the minimum bounding rectangle region, and selects the maximum distance from the calculated distances.

S830: taking the maximum distance as a boundary distance from the polygon region center to each of the polygon region boundaries.

In the embodiment of the present disclosure, after determining the maximum distance from the rectangular-region center to the rectangular region boundaries of the minimum bounding rectangle region, the image processing device can take the maximum distance as the boundary distance from the polygon region center to each of the polygon region boundaries.

S840: adjusting the preset polygon region to obtain the target polygon region according to the center coordinates of the rectangular-region center and the boundary distance.

In the embodiment of the present disclosure, the image processing device calculates a vector (including a moving direction and a moving distance) by which the polygon center point in the preset polygon region needs to be moved according to the center coordinates of the rectangular-region center, then moves the preset polygon region according to the vector to implement position adjustment of the preset polygon region, and then adjusts the polygon boundaries of the preset polygon region according to the maximum distance to implement size adjustment of the preset polygon region, thus obtaining the target polygon region.

For example, the function relationship between the center coordinates of the rectangular-region center of the minimum bounding rectangle region and the center coordinates of the polygon center point in the polygon region is preset in the image processing device. After bringing the center coordinates of the rectangular-region center of the minimum bounding rectangle region into the above function relationship, the image processing device obtains the center coordinates of the polygon center point in the polygon region.

Further, the function relationship between the boundary distance and the adjustment distance of the polygon boundaries of the polygon region is preset in the image processing device. After bringing the boundary distance into the above function relationship, the image processing device can obtain the adjustment distance of the polygon boundaries of the polygon region, and then expand or shrink the polygon boundaries of the polygon region according to the adjustment distance so as to scale the preset polygon region and implement size adjustment of the preset polygon region.

As can be seen, in the embodiment of the present disclosure, the image processing device obtains the center coordinates of the polygon center point in the polygon region according to the function relationship between the center coordinates of the rectangular-region center of the minimum bounding rectangle region and the center coordinates of the polygon center point in the polygon region, and calculates a vector by which the polygon center point in the preset polygon region needs to be moved. Meanwhile, the image processing device obtains the adjustment distance of the polygon boundaries of the polygon region according to the function relationship between the boundary distance and the adjustment distance of the polygon boundaries of the polygon region, and thus adjusts the preset polygon region based on the vector and the adjustment distance to obtain the target polygon region. Therefore, the target polygon region can be obtained only by simple calculation, which improves the calculation efficiency.

In yet another implementation of the present disclosure, when the generated target polygon region is a quadrilateral region (e.g., an isosceles trapezoidal region), Fig. 9 shows a schematic flow chart of a processing process of generating the target polygon region according to the minimum bounding rectangle region and the preset corner point mapping relationship provided by an embodiment of the present disclosure.

As shown in Fig. 9, the processing process may include the following steps:
S910: determining the minimum bounding rectangle region corresponding to the image subject object.

In some embodiments of the present disclosure, the image processing device can firstly perform mask processing on the image subject object to obtain a mask image of the image subject object, and then calculate a minimum bounding rectangle frame to obtain the minimum bounding rectangle region according to the mask image of the image subject object, which will not be further described here.

S920: acquiring corner point coordinates of rectangular-region corner points of the minimum bounding rectangle region.

In some embodiments of the present disclosure, the upper left corner of the image to be processed is taken as the origin of coordinates. After obtaining the minimum bounding rectangle region, the image processing device can determine the coordinates of each rectangular-region corner point of the minimum bounding rectangle region according to boundary points of the minimum bounding rectangle region, which will not be further described here.

S930: calculating the corner point coordinates of the polygon region corner points corresponding to the corner point coordinates of each rectangular-region corner point according to the preset corner point mapping relationship.

In some embodiments of the present disclosure, the preset corner point mapping relationship is preset in the image processing device. The preset corner point mapping relationship comprises the correspondence relationship between the rectangular-region corner points of the minimum bounding rectangle region and the polygon region corner points.

For example, the preset corner point mapping relationship may be the preset function relationship between the corner point coordinates of the rectangular-region corner points of the minimum bounding rectangle region and the corner point coordinates of the polygon region corner points corresponding thereto.

After bringing the corner point coordinates of the rectangular-region corner points of the minimum bounding rectangle region into the above function relationship, the image processing device obtains the corner point coordinates of the polygon region corner points corresponding to the corner point coordinates of each rectangular-region corner point.

S940: generating the target polygon region according to the corner point coordinates of the polygon region corner points.

In the embodiment of the present disclosure, the image processing device can generate a material image with the target polygon region according to the corner point coordinates of the polygon region corner points.

The image processing device firstly generates a canvas having the same size as the image to be processed, then generates corner points at corresponding positions in the canvas according to the corner point coordinates of the polygon region corner points, and internally fills the polygon region based on the generated corner points to obtain the target polygon region.

In the embodiment of the present disclosure, after obtaining the corner point coordinates of the polygon region corner points, the image processing device connects the polygon region corner points, and fills the interior of the connection region formed after connection of the adjacent corner points so as to obtain the target polygon region.

The filling is for example to fill the pixels in the connection region with the same pixel value to the full.

Optionally, the pixel value used to fill the connection region may be 255, i.e., the target polygon region is shown as white.

As can be seen, in the embodiment of the present disclosure, the target polygon region can be directly generated according to the corner point coordinates of the rectangular-region corner points of the minimum bounding rectangle region and the preset corner point mapping relationship, so that the target polygon region can be obtained only by simple calculation, which improves the calculation efficiency.

In the embodiment of the present disclosure, optionally, before calculating the corner point coordinates of the polygon region corner points corresponding to the corner point coordinates of each rectangular-region corner point according to the preset corner point mapping relationship, the processing process further includes the following steps: determining a region display direction of the target polygon region relative to the image subject object; and acquiring the preset corner point mapping relationship corresponding to the region display direction.

The region display direction may be the position of the target polygon region relative to the image subject object. The target polygon region may be arranged in any direction of above, below, left and right of the image subject object.

In some embodiments, the preset corner point mapping relationship can be calculated in the following way:

the horizontal coordinate of the corner point at the upper left corner of the polygon: $P_{lt}^x = P_l - (P_r - P_l) * 0.1$;

the vertical coordinate of the corner point at the upper left corner of the polygon: $P_{lt}^y = P_t + (P_b - P_t) * 0.5$;

the horizontal coordinate of the corner point at the upper right corner of the polygon: $P_{rt}^x = P_r + (P_r - P_l) * 0.1$;

the vertical coordinate of the corner point at the upper right corner of the polygon: $P_{rt}^y = P_{lt}^y$;

the horizontal coordinate of the corner point at the lower left corner of the polygon: $P_{lb}^x = P_l - (P_r - P_l) * 0.5$;

the vertical coordinate of the corner point at the upper left corner of the polygon: $P_{lb}^y = P_b + (P_b - P_t) * 0.1$;

the horizontal coordinate of the corner point at the lower right corner of the polygon: $P_{rb}^x = P_r + (P_r - P_l) * 0.5$; and

the vertical coordinate of the corner point at the lower right corner of the polygon: $P_{rb}^y = P_{lb}^y$.

The above calculation of the preset corner point mapping relationship realizes the target polygon region arranged below the image subject object, so as to form the stereoscopic effect of the image subject object upwards relative to the photo frame.

In some other embodiments, the preset corner point mapping relationship can be calculated in the following way:

the horizontal coordinate of the corner point at the upper left corner of the polygon: $P_{lt}^x = P_l - (P_r - P_l) * 0.1$;

the vertical coordinate of the corner point at the upper left corner of the polygon: $P_{lt}^y = P_t - (P_b - P_t) * 0.3$;
the horizontal coordinate of the corner point at the upper right corner of the polygon: $P_{rt}^x = P_r - (P_r - P_l) * 0.4$;
the vertical coordinate of the corner point at the upper right corner of the polygon: $P_{rt}^y = P_t - (P_b - P_t) * 0.1$;
the horizontal coordinate of the corner point at the lower left corner of the polygon: $P_{lb}^x = P_{lt}^x$;
the vertical coordinate of the corner point at the upper left corner of the polygon: $P_{lb}^y = P_b + (P_b - P_t) * 0.3$;
the horizontal coordinate of the corner point at the lower right corner of the polygon: $P_{rb}^x = P_{rt}^x$; and
the vertical coordinate of the corner point at the lower right corner of the polygon: $P_{rb}^y = P_b + (P_b - P_t) * 0.1$.

The above calculation of the preset corner point mapping relationship realizes the target polygon region arranged on left of the image subject object so as to form the stereoscopic effect of the image subject object rightwards relative to the photo frame.

In some other embodiments, the preset corner point mapping relationship can be calculated in the following way:

the horizontal coordinate of the corner point at the upper left corner of the polygon: $P_{lt}^x = P_l + (P_r - P_l) * 0.4$;
the vertical coordinate of the corner point at the upper left corner of the polygon: $P_{lt}^y = P_t - (P_b - P_t) * 0.1$;
the horizontal coordinate of the corner point at the upper right corner of the polygon: $P_{rt}^x = P_r + (P_r - P_l) * 0.1$;
the vertical coordinate of the corner point at the upper right corner of the polygon: $P_{rt}^y = P_t - (P_b - P_t) * 0.3$;
the horizontal coordinate of the corner point at the lower left corner of the polygon: $P_{lb}^x = P_{lt}^x$;
the vertical coordinate of the corner point at the upper left corner of the polygon: $P_{lb}^y = P_b + (P_b - P_t) * 0.1$;
the horizontal coordinate of the corner point at the lower right corner of the polygon: $P_{rb}^x = P_{rt}^x$; and
the vertical coordinate of the corner point at the lower right corner of the polygon: $P_{rb}^y = P_b + (P_b - P_t) * 0.3$.

The above calculation of the preset corner point mapping relationship realizes the target polygon region arranged on right of the image subject object so as to form the stereoscopic effect of the image subject object leftwards relative to the photo frame.

Thus, in the embodiment of the present disclosure, different stereoscopic effects can be realized based on different region display directions, which increases the diversity of the image processing effects.

In yet another implementation of the present disclosure, S140 may for example include: creating the additional image material of the same size as the image to be processed; extracting first image content located outside the target polygon region from the additional image material to obtain a first background image; filling the first background image with second image content to obtain a second background image, the second image content being inside the target polygon region of the image to be processed; and filling the second background image with the image subject object to obtain the fused image.

In the embodiment of the present disclosure, the image processing device firstly creates the additional image material of the same size as the image to be processed. For example, the creating method may be to: 1) generate the additional image material of the same size as the image to be processed by using a preset image generation method, such as according to the preset color, or the color specified by the user, or the solid color, or the gradient color; or 2) obtain the additional image material of the same size as the image to be processed by acquiring the preset background image and cropping the periphery of the preset background image with the preset background image serving as the center.

Then, the image processing device extracts the first image content located outside the target polygon region from the additional image material and use the first image content to fill the image region of the material image outside the target polygon region of the material image, so as to obtain the first background image, that is, the image processing device maps the first image content outside the target polygon region of the additional image material into the material image having the target polygon region, so as to obtain the first background image.

In some examples, extracting first image content located outside the target polygon region from the additional image material to obtain a first background image may for example include: acquiring the region boundary position of the target polygon region; extracting the first image content located outside the region boundary position from the additional image material; and filling the corresponding position of the material image having the target polygon region with the first image content, so as to obtain the first background image.

Acquiring the region boundary position of the target polygon region may for example include: performing a mask processing on the target polygon region to obtain a mask image of the target polygon region.

For example, the image processing device sets each pixel value in the target polygon region of the material image to 255, and sets the mask value corresponding to each pixel value to 1, so the target polygon region is shown as white. The image processing device sets each pixel value in the non-target polygon region (for example, other region except the target polygon region) corresponding to the material image of the target polygon region to 0, and sets the mask value corresponding to each pixel value to 0, so the non-target polygon region corresponding to the material image with the target polygon region is shown as black. After this step, the mask image of the target polygon region can be obtained. Thus, the mask image of the first background image can be obtained.

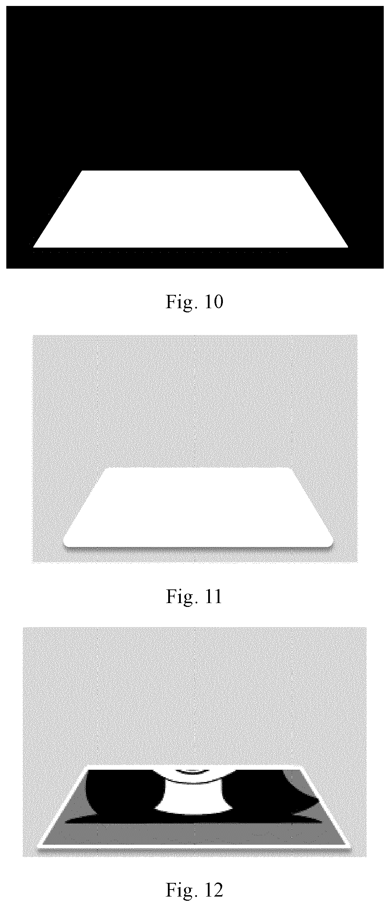

For example, the mask processing is performed on the target polygon region shown in Fig. 3 to obtain the mask image of the target polygon region as shown in Fig. 10.

In some embodiments, in order to display the image subject content in a more stereoscopic way, a morphological expansion processing can be performed on the mask image of the target polygon region. The morphological expansion operation may be to expand the boundaries of the target polygon region.

For example, the image processing device can add the first image content to the mask image of the target polygon region in the following way:

$$I'_{edge} = I'*(1-M_{edge})+255*M_{edge}$$

where l'$_{edge}$ is the mask image with the first background image, I' is the additional image material, and M$_{edge}$ is the mask image of the target polygon region after morphological expansion processing.

For example, morphological expansion processing is performed on the mask image of the target polygon region shown in Fig. 10 to obtain the mask image of the first background image as shown in Fig. 11.

Further, the image processing device continues to fill the first background image with the second image content, which is located inside the target polygon region of the image to be processed, to obtain the second background image, that is, the image processing device maps the second image content inside the target polygon region of the image to be processed to the first background image to obtain the second background image.

In some examples, filling the first background image with the second image content, which is located inside the target polygon region of the image to be processed, to obtain the second background image may for example include: acquiring a region boundary position of the target polygon region on which morphological expansion processing has not been performed; extracting the second image content located inside the region boundary position from the image to be processed; and filling the corresponding position of the first background image with the second image content to obtain the second background image.

For example, the image processing device fills the corresponding position in the mask image of the first background image with the second image content, so as to obtain the second background image.

For example, the image processing device can add the second image content to the mask image of the first background image in the following way:

$$I'_{frame} = I'_{edge}*(1-M_{frame})+I*M_{frame}$$

where l'$_{frame}$ is the second background image, $I'_{edge}$ is the mask image of the first background image, M$_{frame}$ is the mask image of the target polygon region, and I is the image to be processed.

For example, the second image content is added to the first background image shown in Fig. 11 to obtain the second background image as shown in Fig. 12.

Further, the image processing device continues to fill the second background image with the image subject object to obtain the fused image, that is, map the image subject object in the image to be processed to the second background image to obtain the fused image.

In some examples, filling the second background image with the image subject object to obtain the fused image may for example include: acquiring the object boundary position of the image subject object; extracting the subject object content located inside the object boundary position from the image to be processed; and filling the corresponding position in the second background image with the subject object content to obtain the fused image.

For example, the image processing device fills the corresponding position in the second background image with the subject object content to obtain the fused image.

For example, the image processing device can add the subject object content to the second background image in the following way:

$$I'_{3d} = I'_{frame}*(1-M_{obj})+I*M_{obj}$$

where $I'_{3d}$ is the fused image, l'$_{frame}$ is the second background image, M$_{obj}$ is the mask image of the image subject object, and I is the image to be processed.

For example, the subject object content is added to the second background image shown in Fig. 12 to obtain the fused image as shown in Fig. 4.

Thus, in the embodiment of the present disclosure, the image to be processed and the additional image material can be fused rapidly and accurately through the mask image of the target polygon region, so as to obtain the fused image with high image quality and fusion quality.

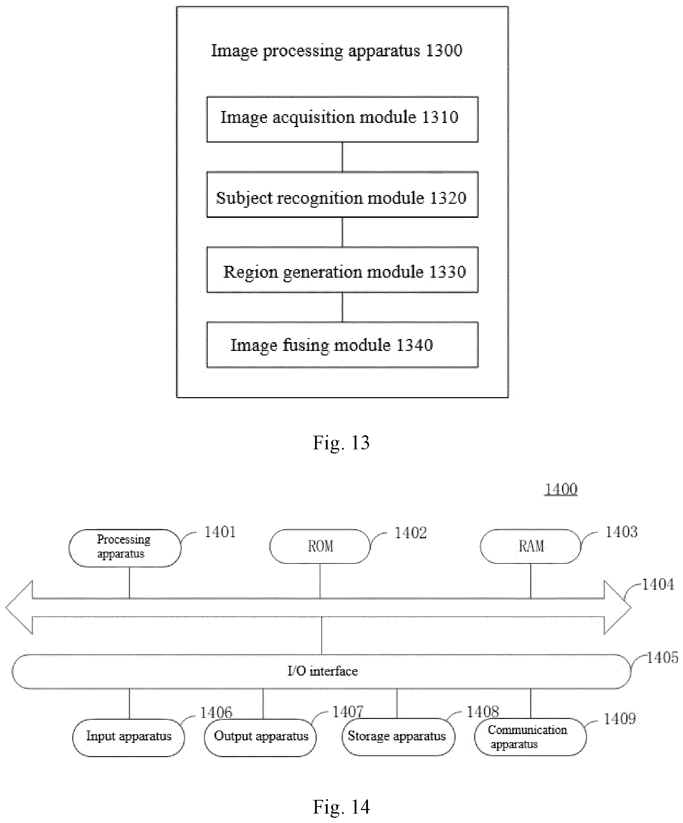

Fig. 13 is a structure diagram of an image processing apparatus provided by an embodiment of the present disclosure. The image processing apparatus provided in the embodiment of the present disclosure can execute the processing flow provided in the embodiments of the image processing method. As shown in Fig. 13, the image processing apparatus 1300 comprises an image acquisition module 1310, a subject recognition module 1320, a region generation module 1330 and an image fusing module 1340.

The image acquisition module 1310 is configured to acquire an image to be processed.

The subject recognition module 1320 is configured to recognize a subject of the image to be processed to obtain an image subject object.

The region generation module 1330 is configured to generate a target polygon region corresponding to the image subject object. A part of the image subject object is located within the target polygon region, and the other part of the image subject object is located outside the target polygon region.

The image fusing module 1340 is configured to fuse the image to be processed and an additional image material to obtain a fused image according to the target polygon region. The fused image and the image to be processed have the same image content in a first image region, the image content of the fused image in a second image region presents the additional image material, the first image region is a combined region of the target polygon region and an image region occupied by the image subject object, and the second image region is an image region outside the first image region.

In the embodiment of the present disclosure, after the image subject object in the image to be processed is recognized and the target polygon region which has a part of the image subject object located therein and the other part of the image subject object located outside is further generated, the image to be processed and the additional image material are fused to obtain the fused image according to the target polygon region. Thus, the fused image and the image to be processed have the same image content in the first image region occupied by the target polygon region and the image subject object, and the image content of the fused image in the second image region outside the first image region presents the additional image material, thereby presenting the effect of stereoscopically displaying the image subject object relative to the target polygon region and meeting the user's requirements for stereoscopic display of the image so as to improve the user experience.

In some embodiments of the present disclosure, the region generation module 1330 may include a region determination unit and a region adjustment unit.

The region determination unit is configured to determine a minimum bounding rectangle region corresponding to the image subject object.

The region adjustment unit is configured to adjust a preset polygon region based on the minimum bounding rectangle region to obtain the target polygon region. The adjusting comprises size adjusting and position adjusting.

In some embodiments of the present disclosure, the region adjustment unit is further configured to: acquire corner point coordinates of rectangular-region corner points of the minimum bounding rectangle region; calculate corner point coordinates of polygon region corner points according to the corner point coordinates of the rectangular-region corner points; and adjust the preset polygon region to obtain the target polygon region according to the corner point coordinates of the polygon region corner points.

In some embodiments of the present disclosure, the region adjustment unit is further configured to: acquire corner point coordinates of rectangular-region corner points and center coordinates of a rectangular-region center of the minimum bounding rectangle region; calculate a maximum distance from the rectangular-region center to rectangular region boundaries of the minimum bounding rectangle region according to the corner point coordinates of the rectangular-region corner points and the center coordinates of the rectangular-region center; take the maximum distance as a boundary distance from a polygon region center to each of polygon region boundaries; and adjust the preset polygon region to obtain the target polygon region according to the center coordinates of the rectangular-region center and the boundary distance.

In some embodiments of the present disclosure, the region generation module 1330 may further include a region determination unit, a coordinate acquisition unit, a coordinate calculation unit, and a region generation unit.

The region determination unit is configured to determine the minimum bounding rectangle region corresponding to the image subject object.

The coordinate acquisition unit is configured to acquire the corner point coordinates of the rectangular-region corner points of the minimum bounding rectangle region.

The coordinate calculation unit is configured to calculate the corner point coordinates of the polygon region corner points corresponding to the corner point coordinates of each rectangular-region corner point according to the preset corner point mapping relationship.

The region generation unit is configured to generate the target polygon region according to the corner point coordinates of the polygon region corner points.

In some embodiments of the present disclosure, the region generation module 1330 may further include a direction determination unit and a relationship acquisition unit.

The direction determination unit is configured to determine a region display direction of the target polygon region relative to the image subject object.

The relationship acquisition unit is configured to acquire the preset corner point mapping relationship corresponding to the region display direction.

In some embodiments of the present disclosure, the image fusing module 1340 may include a material creation unit, a background extraction unit, a first filling unit, and a second filling unit.

The material creation unit is configured to create an additional image material of the same size as the image to be processed.

The background extraction unit is configured to extract first image content located outside the target polygon region from the additional image material to obtain a first background image.

The first filling unit is configured to fill the first background image with the second image content, which is in the image to be processed located inside the target polygon region, to obtain a second background image.

The second filling unit is configured to fill the second background image with the image subject object to obtain the fused image.

It should be noted that the image processing apparatus 1300 shown in Fig. 13 can execute the steps of the method embodiments shown in Fig. 1 to Fig. 12, and realize the processes and effects of the method embodiments shown in Fig. 1 to Fig. 12, which will not be further described here.

The embodiment of the present disclosure further provides an image processing device, which may include a processor and a memory. The memory is used to store executable instructions. The processor is used to read the executable instructions from the memory and execute the executable instructions to implement the image processing method in the above embodiments.

Referring to Fig. 14, Fig. 14 illustrates a schematic structural diagram of an image processing device. Referring specifically to Fig. 14, there is shown a structural schematic diagram of an image processing apparatus 1400 suitable for implementing an embodiment of the present disclosure.

The image processing apparatus 1400 in the embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The server can be an independent server, or a cluster of multiple servers, including servers built locally and servers built in the cloud.

It is noted that the image processing device 1400 illustrated in Fig. 14 is merely an example, and should not pose any limitation to the functions and the range of use of the embodiments of the present disclosure.

As illustrated in Fig. 14, the image processing device 1400 may include a processing apparatus 1401 (e.g., a central processing unit, a graphics processing unit, etc.), which can perform various suitable actions and processing according to a program stored in a read-only memory (ROM) 1402 or a program loaded from a storage apparatus 1408 into a random-access memory (RAM) 1403. The RAM 1403 further stores various programs and data required for operations of the electronic device 1400. The processing apparatus 1401, the ROM 1402, and the RAM 1403 are interconnected by means of a bus 1404. An input/output (I/O) interface 1405 is also connected to the bus 1404.

Usually, the following apparatus may be connected to the I/O interface 1405: an input apparatus 1406 including, for example, a touch screen, a touch pad, a keyboard, a mouse, a camera, a microphone, an accelerometer, a gyroscope, or the like; an output apparatus 1407 including, for example, a liquid crystal display (LCD), a loudspeaker, a vibrator, or the like; a storage apparatus 1408 including, for example, a magnetic tape, a hard disk, or the like; and a communication apparatus 1409. The communication apparatus 1409 may allow the electronic device 1400 to be in wireless or wired communication with other devices to exchange data. While Fig. 14 illustrates the electronic device 1400 having various apparatuses, it should be understood that not all of the illustrated apparatuses are necessarily implemented or included. More or fewer apparatuses may be implemented or included alternatively.

Embodiments of the present disclosure further provides a computer-readable medium having computer programs stored therein, wherein when the computer programs are executed by a processor, the processor implements the image processing method in the above embodiments.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 1409, or installed from the storage apparatus 1408, or installed from ROM 1402. When the computer program is executed by the processing apparatus 1401, the above functions defined in the image processing method in the embodiments of the present disclosure are executed.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned image processing device, or may also exist alone without being assembled into the image processing device.

The above-mentioned computer-readable medium carries one or more programs, and when the one or more programs are executed by the image processing device, the image processing device is caused to:

acquiring an image to be processed; recognizing a subject of the image to be processed to obtain an image subject object; generating a target polygon region corresponding to the image subject object, wherein a part of the image subject object is located within the target polygon region, and the other part of the image subject object is located outside the target polygon region; and fusing the image to be processed and an additional image material to obtain a fused image according to the target polygon region, wherein the fused image and the image to be processed have the same image content in a first image region, the image content of the fused image in a second image region presents the additional image material, the first image region is a combined region of the target polygon region and an image region occupied by the image subject object, and the second image region is an image region outside the first image region.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. An image processing method, comprising:

   acquiring an image to be processed;
   recognizing a subject of the image to be processed to obtain an image subject object;
   generating a target polygon region corresponding to the image subject object, wherein a part of the image subject object is located within the target polygon region, and the other part of the image subject object is located outside the target polygon region; and
   fusing the image to be processed and an additional image material to obtain a fused image according to the target polygon region, wherein the fused image and the image to be processed have the same image content in a first image region, the image content of the fused image in a second image region presents the additional image material, the first image region is a combined region of the target polygon region and an image region occupied by the image subject object, and the second image region is an image region outside the first image region.

2. The method according to claim 1, wherein the generating a target polygon region corresponding to the image subject object comprises:

   determining a minimum bounding rectangle region corresponding to the image subject object; and
   adjusting a preset polygon region based on the minimum bounding rectangle region to obtain the target polygon region, wherein the adjusting comprises size adjusting and position adjusting.

3. The method according to claim 2, wherein the adjusting a preset polygon region based on the minimum bounding rectangle region to obtain the target polygon region comprises:

   acquiring corner point coordinates of rectangular-region corner points of the minimum bounding rectangle region;

calculating corner point coordinates of polygon region corner points according to the corner point coordinates of the rectangular-region corner points; and

adjusting the preset polygon region to obtain the target polygon region according to the corner point coordinates of the polygon region corner points.

4. The method according to claim 2, wherein the adjusting a preset polygon region based on the minimum bounding rectangle region to obtain the target polygon region comprises:

acquiring corner point coordinates of each of the rectangular-region corner points and center coordinates of a rectangular-region center of the minimum bounding rectangle region;

calculating a maximum distance from the rectangular-region center to rectangular region boundaries of the minimum bounding rectangle region according to the corner point coordinates of the rectangular-region corner points and the center coordinates of the rectangular-region center;

taking the maximum distance as a boundary distance from a polygon region center to each of polygon region boundaries; and

adjusting the preset polygon region to obtain the target polygon region according to the center coordinates of the rectangular-region center and the boundary distance.

5. The method according to claim 1, wherein the generating a target polygon region corresponding to the image subject object comprises:

determining a minimum bounding rectangle region corresponding to the image subject object;

acquiring corner point coordinates of each of the rectangular-region corner points of the minimum bounding rectangle region;

calculating corner point coordinates of polygon region corner points corresponding to the corner point coordinates of each of the rectangular-region corner points according to the preset corner point mapping relationship; and

generating the target polygon region according to the corner point coordinates of the polygon region corner points.

6. The method according to claim 5, wherein before the calculating corner point coordinates of polygon region corner points corresponding to the corner point coordinates of each of the rectangular-region corner points according to the preset corner point mapping relationship, the method further comprises:

determining a region display direction of the target polygon region relative to the image subject object; and

acquiring the preset corner point mapping relationship corresponding to the region display direction.

7. The method according to any one of claims 1-6, wherein the fusing the image to be processed and an additional image material to obtain a fused image according to the target polygon region comprises:

creating the additional image material of the same size as the image to be processed;

extracting first image content located outside the target polygon region from the additional image material to obtain a first background image;

filling the first background image with second image content to obtain a second background image, the second image content being inside the target polygon region of the image to be processed; and

filling the second background image with the image subject object to obtain the fused image.

8. An image processing apparatus, comprising:

an image acquisition module, configured to acquire an image to be processed;

a subject recognition module, configured to recognize a subject of the image to be processed to obtain an image subject object;

a region generation module, configured to generate a target polygon region corresponding to the image subject object, wherein a part of the image subject object is located within the target polygon region, and the other part of the image subject object is located outside the target polygon region; and

an image fusing module, configured to fuse the image to be processed and an additional image material to obtain a fused image according to the target polygon region, wherein the fused image and the image to be processed have the same image content in a first image region, the image content of the fused image in a second image region presents the additional image material, the first image region is a combined region of the target polygon region and an image region occupied by the image subject object, and the second image region is an image region outside the first image region.

9. An image processing device, comprising:

a processor; and
a memory, having executable instructions stored therein;

wherein the processor is configured to read the executable instructions from the memory and execute the executable instructions to implement the image processing method according to any one of claims 1-7.

10. A computer-readable medium, having computer programs stored therein, wherein when the computer programs are executed by a processor, the processor implements the image processing method according to any one of claims 1-7.

| Acquire an image to be processed | S110 |

↓

| Perform subject recognition on the image to be processed, so as to obtain an image subject object | S120 |

↓

| Generate a target polygonal region corresponding to the image subject object, wherein part of the image subject object is located in the target polygonal region, and the other part of the image subject object is located outside the targetpolygonal region | S130 |

↓

| According to the target polygonal region, fuse the image to be processed and an additional image material, so as to obtain a fused image, wherein the content of the fused image and the content of the image to be processed are consistent in a first image region, the additional image material is presented by means of the image content of the fused image in a second image region, the first image region is a combined region of the target polygonal region and an image region occupied by the image subject object, and the second image region is animage region outside the first image region | S140 |

Fig. 1

Fig. 2

Fig. 3

Fig. 4

Fig. 5

Fig. 6

Acquiring a corner point coordinate of each of rectangular-region corner points of the minimum bounding rectangle region ⟨ S710

Calculating corner point coordinates of polygon region corner points according to the corner point coordinates of the rectangular-region corner points ⟨ S720

Adjusting the preset polygon region to obtain the target polygon region according to the corner point coordinates of the polygon region corner points ⟨ S730

Fig. 7

Acquiring corner point coordinates of rectangular-region corner points and center coordinates of the rectangular-region center of the minimum bounding rectangle region — S810

Calculating a maximum distance from the rectangular-region center to the rectangular region boundaries of the minimum bounding rectangle region according to the corner point coordinates of the rectangular-region corner points and the center coordinates of the rectangular-region center — S820

Taking the maximum distance as a boundary distance from the polygon region center to each of the polygon region boundaries — S830

Adjusting the preset polygon region to obtain the target polygon region according to the center coordinates of the rectangular-region center and the boundary distance — S840

Fig. 8

Determining the minimum bounding rectangle region corresponding to the image subject object — S910

Acquiring corner point coordinates of rectangular-region corner points of the minimum bounding rectangle region — S920

Calculating the corner point coordinates of the polygon region corner points corresponding to the corner point coordinates of each rectangular-region corner point according to the preset corner point mapping relationship — S930

Generating the target polygon region according to the corner point coordinates of the polygon region corner points — S940

Fig. 9

Fig. 10

Fig. 11

Fig. 12

Image processing apparatus 1300

Image acquisition module 1310

Subject recognition module 1320

Region generation module 1330

Image fusing module 1340

Fig. 13

1400

Processing apparatus ⌐ 1401    ROM ⌐ 1402    RAM ⌐ 1403

⌐1404

I/O interface ⌐1405

Input apparatus    Output apparatus    Storage apparatus    Communication apparatus
⌐1406              ⌐1407              ⌐1408              ⌐1409

Fig. 14

## INTERNATIONAL SEARCH REPORT

| International application No. |
| --- |
| **PCT/CN2023/120688** |

**A. CLASSIFICATION OF SUBJECT MATTER**

G06V 20/00(2022.01)i

According to International Patent Classification (IPC) or to both national classification and IPC

**B. FIELDS SEARCHED**

Minimum documentation searched (classification system followed by classification symbols)

IPC:G06V, G06T, G06K

Documentation searched other than minimum documentation to the extent that such documents are included in the fields searched

Electronic data base consulted during the international search (name of data base and, where practicable, search terms used)

CNTXT; CNKI; ENTXT; VEN; IEEE: 图像, 主体, 对象, 识别, 多边形区域, 融合, 素材, 立体, 内容, 最小外接矩形, 相框; image, main, object, recognize, polygonal area, blend, material, stereo, content, minimum circumscribing rectangle, frame

**C. DOCUMENTS CONSIDERED TO BE RELEVANT**

| Category* | Citation of document, with indication, where appropriate, of the relevant passages | Relevant to claim No. |
| --- | --- | --- |
| A | CN 110084204 A (BEIJING BYTEDANCE NETWORK TECHNOLOGY CO., LTD.) 02 August 2019 (2019-08-02) entire document | 1-10 |
| A | CN 111783777 A (BEIJING BYTEDANCE NETWORK TECHNOLOGY CO., LTD.) 16 October 2020 (2020-10-16) entire document | 1-10 |
| A | CN 113315924 A (BEIJING BYTEDANCE NETWORK TECHNOLOGY CO., LTD.) 27 August 2021 (2021-08-27) entire document | 1-10 |
| A | US 2003112503 A1 (IDELIX SOFTWARE INC.) 19 June 2003 (2003-06-19) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 December 2023** | **26 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120688**

| Patent document cited in search report | | | Publication date (day/month/year) | Patent family member(s) | | | Publication date (day/month/year) |
|---|---|---|---|---|---|---|---|
| CN | 110084204 | A | 02 August 2019 | CN | 110084204 | B | 24 November 2020 |
| CN | 111783777 | A | 16 October 2020 | CN | 111783777 | B | 24 November 2023 |
| CN | 113315924 | A | 27 August 2021 | WO | 2021170013 | A1 | 02 September 2021 |
| | | | | BR | 112022017206 | A2 | 11 October 2022 |
| | | | | KR | 20220137067 | A | 11 October 2022 |
| | | | | US | 2022392130 | A1 | 08 December 2022 |
| | | | | IN | 202227050587 | A | 09 December 2022 |
| | | | | EP | 4113975 | A1 | 04 January 2023 |
| | | | | EP | 4113975 | A4 | 09 August 2023 |
| | | | | JP | 2023515607 | W | 13 April 2023 |
| US | 2003112503 | A1 | 19 June 2003 | US | 7088364 | B2 | 08 August 2006 |
| | | | | CA | 2361341 | A1 | 07 May 2003 |
| | | | | US | 2006192780 | A1 | 31 August 2006 |
| | | | | US | 7737976 | B2 | 15 June 2010 |
| | | | | US | 2013222372 | A1 | 29 August 2013 |
| | | | | US | 8947428 | B2 | 03 February 2015 |
| | | | | US | 2010201785 | A1 | 12 August 2010 |
| | | | | US | 8400450 | B2 | 19 March 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211193567